# EUROPÄISCHE PATENTSCHRIFT

(11) **EP 1 240 173 B1**
(45) Veröffentlichungstag und Bekanntmachung des Hinweises auf die Patenterteilung: **14.05.2003**
(21) Anmeldenummer: 00993613.9
(22) Anmeldetag: 22.12.2000
(51) Int. Cl.: C07F 9/38, C07F 9/40

(54) **VERFAHREN ZUR HERSTELLUNG VON N-PHOSPHONOMETHYLGLYCIN**
METHOD FOR PRODUCTION OF N-PHOSPHONOMETHYLGLYCINE
PROCEDE DE PRODUCTION DE N-PHOSPHONOMETHYLGLYCINE

(30) Priorität: 23.12.1999 DE 19962601
(43) Veröffentlichungstag der Anmeldung: 18.09.2002
(73) Patentinhaber: BASF AKTIENGESELLSCHAFT, 67056 Ludwigshafen (DE)
(72) Erfinder: WULFF, Christian, D-68163 Mannheim (DE); ORSTEN, Stefan, 67158 Ellerstadt (DE); OFTRING, Alfred, 67098 Bad Dürkheim (DE)
(74) Vertreter: Kinzebach, Werner, Dr.
(86) Internationale Anmeldenummer: EP0013162
(87) Internationale Veröffentlichungsnummer: WO01047938

(56) Entgegenhaltungen:
- EP-A- 0 097 522
- EP-A- 0 104 775
- EP-A- 0 149 294
- US-A- 5 053 529

## Beschreibung

Die Erfindung betrifft ein Verfahren zur Herstellung von N-Phosphonomethylglycin durch Umsetzung einer Hexahydrotriazinverbindung mit einem Triacylphosphit sowie Zwischenprodukte zur Anwendung in diesem Verfahren.

N-Phosphonomethylglycin (Glyphosate) ist ein in großem Umfang eingesetztes Totalherbizid. Zahlreiche Verfahren zur Herstellung von Phosphonomethylglycin sind bekannt. Eine Herstellungsmöglichkeit besteht darin, Hexahydrotriazinderivate mit Phosphorigsäureestern zur Reaktion zu bringen. So beschreibt die US 4,181,800 die Herstellung von Hexahydrotriazinen der Formel: 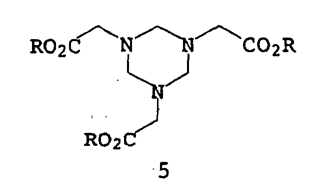 und die US 4,053,505 die Umsetzung dieser Hexahydrotriazine mit Phosphorigsäurediestern und anschließende Hydrolyse des erhaltenen Produktes zu Phosphonomethylglycin. Es hat sich gezeigt, daß sowohl Ausbeute als auch Selektivität zugunsten des monophosphonierten Produktes verbesserungswürdig sind. Außerdem sind Phosphorigsäurediester sehr teuer.

EP-A-104 775 (entsprechend US 4,425,284, US 4,482,504 und US 4,535,181) beschreibt die Umsetzung obiger Hexahydrotriazine mit einem Acylhalogenid und die anschließende Phosphonierung mit einem Phosphorigsäuretriester und Verseifung zu Phosphonomethylglycin gemäß folgender Reaktionsgleichung:

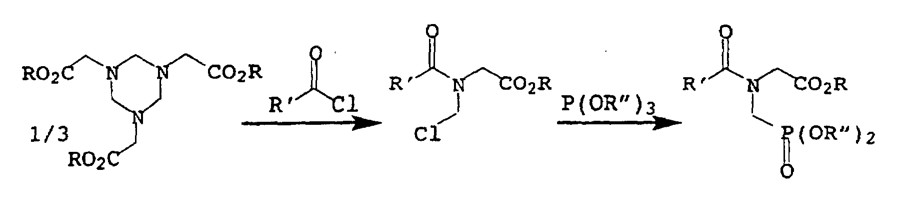

Man erhält auf diese Weise zwar Phosphonomethylglycin in relativ guter Ausbeute, das Verfahren erfordert jedoch neben der Verwendung der teuren Phosphorigsäureester noch zusätzlich den Einsatz eines Carbonsäurechlorides. Hinzukommt, daß das Carbonsäurechlorid allenfalls in Form der freien Säure zurückgewonnen und dann in einem separaten Schritt wieder in das Säurechlorid überführt werden könnte, was die Kosten des Verfahrens erheblich erhöht. Ferner kann der Alkohol, mit dem die Phosphorigsäure verestert ist, nicht vollständig recycliert werden, da bei der Reaktion ein Äquivalent des entsprechenden Alkylchlorids entsteht, welches zudem toxikologisch bedenklich ist.

Die US 4,428,888 (entsprechend EP-A-149 294) beschreibt die Umsetzung des oben erwähnten Hexahydrotriazins mit einem Phosphorigsäurechlorid in Anwesenheit einer starken wasserfreien Säure, beispielsweise Chlorwasserstoff und einer C₁-C₆-Carbonsäure, wie Essigsäure. Auf diese Weise erhält man zahlreiche undefinierte Nebenprodukte, welche die Ausbeute an Phosphonomethylglycin erniedrigen und eine aufwendige Reinigung des Produktes erfordern.

Die US 4,442,044 beschreibt die Umsetzung eines Hexahydrotriazins der Formel 5 mit einem Phosphorigsäuretriester zu der entsprechenden Phosphonatverbindung, die als Herbizid verwendet wird.

In der DD-A-141 929 und DD-A-118 435 ist die Umsetzung eines Alkalimetallsalzes des obigen Hexahydrotriazins (R = beispielsweise Na) mit einem Phosphorigsäurediester beschrieben. Aufgrund der schlechten Löslichkeit der Alkalisalze erhält man jedoch einen nur geringen Umsatz.

Die US 5,053,529 beschreibt die Herstellung von Phosphonomethylglycin durch Umsetzung obiger Hexahydrotriazine mit Phosphorigsäuretriestern in Gegenwart von Titantetrachlorid und anschließende Verseifung des erhaltenen Produktes. Die Verwendung von Titantetrachlorid verteuert die Herstellung erheblich. Außerdem sind die Ausbeuten an Phosphonomethylglycin unbefriedigend.

Die US 4,454,063, US 4,487,724 und US 4,429,124 beschreiben die Herstellung von Phosphonomethylglycin durch Umsetzung einer Verbindung der Formel 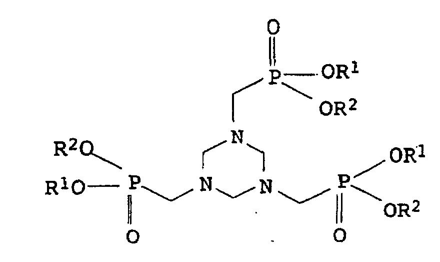 worin R¹ und R² aromatische oder aliphatische Gruppen bedeuten, mit RCOX (X = Cl, Br, I) zu einer Verbindung der Formel

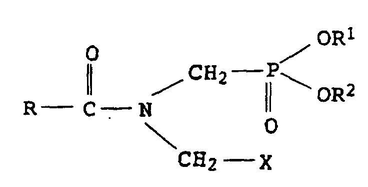

Reaktion dieser Verbindung mit einem Metallcyanid und Hydrolyse des erhaltenen Produktes. Die Nachteile dieses Verfahrens sind wie oben bezüglich der Verwendung des Säurechlorids angegeben.

Weitere Synthesemöglichkeiten sind ausgehend von dem Cyanomethyl-substituierten Hexahydrotriazin der Formel 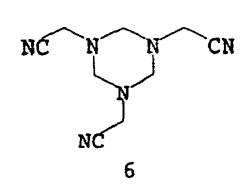 beschrieben. So offenbaren die US 3,923,877 und US 4,008,296 die Umsetzung dieses Hexahydrotriazinderivates mit einem Dialkylphosphonat in Gegenwart eines sauren Katalysators, wie Chlorwasserstoff, einer Lewis-Säure, einem Carbonsäurechlorid oder -anhydrid, zu einer Verbindung der Formel:

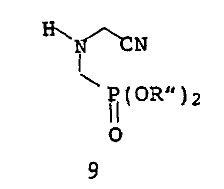

Anschließende Hydrolyse ergibt das Phosphonomethylglycin, wobei 8 bis 10% des zweifach phosphonomethylierten Produktes entstehen.

Die US 4,067,719, US 4,083,898, US 4,089,671 und DE-A-2751631 beschreiben die Umsetzung des Cyanomethyl-substituierten Hexahydrotriazins mit einem Diarylphosphonat ohne Katalysator zu einer Verbindung 9 mit R" = Aryl. Dieses Verfahren weist die gleichen oben für die Verwendung des Carboxy-substituierten Hexahydrotriazins 5 beschriebenen Nachteile auf.

Die EP-A-097 522 (entsprechend US 4,476,063 und US 4,534,902) beschreibt die Umsetzung des Hexahydrotriazins 6 mit einem Acylhalogenid zu 10, anschließende Phosphonierung mit einem Phosphorigsäuretriester oder -diester zu 11 und schließlich Verseifung zu Phosphonomethylglycin gemäß folgender Reaktionsgleichung:

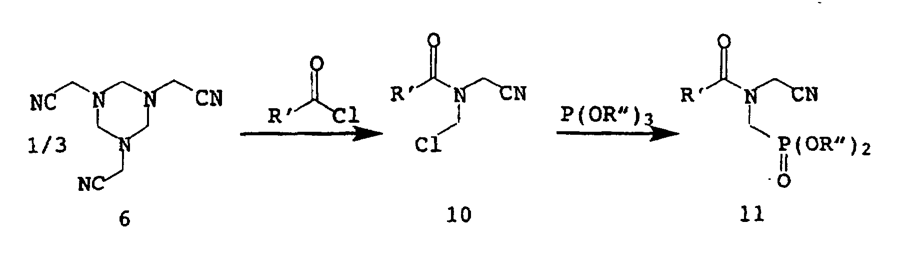

Auch hier sind die gleichen Nachteile zu beobachten wie für die Verfahren unter Verwendung der Carboxy-substituierten Hexahydrotriazinderivate.

Schließlich beschreibt die US 4,415,503 die Umsetzung des Cyanomethyl-substituierten Hexahydrotriazins analog zu dem in der US 4,428,888 beschriebenen Verfahren. Auch in diesem Fall ist die verstärkte Bildung von Nebenprodukten zu beobachten.

Die EP 164 923 A beschreibt eine verbesserte Hydrolyse einer Verbindung der Formel 11.

Der vorliegenden Erfindung liegt somit die Aufgabe zugrunde, ein einfaches und billiges Verfahren zur Herstellung von Phosphonomethylglycin zur Verfügung zu stellen, bei dem das Phosphonomethylglycin außerdem in hoher Reinheit anfällt.

überraschenderweise wurde nun gefunden, daß diese Aufgabe gelöst wird, wenn man ein Hexahydrotriazinderivat mit einem Triacylphosphit zur Reaktion bringt und das erhaltene Produkt anschließend zu Phosphonomethylglycin hydrolysiert.

Die vorliegende Erfindung betrifft daher ein Verfahren zur Herstellung von N-Phosphonomethylglycin, wobei man
a) ein Hexahydrotriazinderivat der Formel II 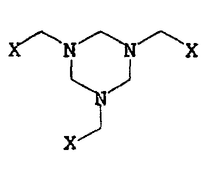 worin
   X für CN, COOZ, CONR¹R² oder CH₂OY steht,
   Y für H oder einen Rest steht, der leicht gegen H austauschbar ist;
   Z für H, ein Alkalimetall, Erdalkalimetall, C₁-C₁₈-Alkyl oder Aryl, das gegebenenfalls substituiert ist durch C₁-C₄-Alkyl, NO₂ oder OC₁-C₄-Alkyl, steht;
   R¹ und R², die gleich oder verschieden sein können, für H oder C₁-C₄-Alkyl stehen,
      mit einem Triacylphosphit der Formel III

      P(OCOR³)₃

      worin die Reste R³, die gleich oder verschieden sein können, für C₁-C₁₈-Alkyl oder Aryl, das gegebenenfalls substituiert ist durch C₁-C₄-Alkyl, NO₂ oder OC₁-C₄-Alkyl, oder für Methyl, stehen,
      zu einer Verbindung der Formel I 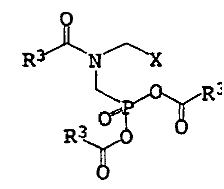 worin R³ und X die oben angegebenen Bedeutungen besitzen, umsetzt und
b) die Verbindung der Formel I hydrolysiert und, falls X für CH₂OY steht, oxidiert.Bevorzugt wird, daß die Verbindungen der Formeln III in im wesentlichen äquivalenten Mengen eingesetzt werden.

Weiter betrifft die Erfindung die Verbindungen der Formel I sowie deren Herstellung gemäß Schritt a) des Verfahrens zur Herstellung von Phosphonomethylglycin.

Alkyl bedeutet eine gerade oder verzweigte Alkylkette mit vorzugsweise 1 bis 8 Kohlenstoffatomen und insbesondere 1 bis 4 Kohlenstoffatomen. Beispiele für Alkyl sind Methyl, Ethyl, n-Propyl, i-Propyl, n-Butyl, i-Butyl, sek-Butyl, t-Butyl, n-Hexyl, 2-Ethylhexyl, etc.

Aryl steht vorzugsweise für Phenyl und Naphthyl.

X steht vorzugsweise für CN oder COOZ.

Z steht vorzugsweise für H, Alkalimetall oder C₁-C₁₈-Alkyl.

Wenn Y für einen Rest steht, der sich leicht gegen H austauschen läßt, handelt es sich vorzugsweise um einen aliphatischen oder aromatischen Acylrest oder um eine C₁-C₆-Alkylgruppe. Der aliphatische Acylrest ist vorzugsweise ein C₁-C₆-CO-Rest, bei dem aromatischen Acylrest handelt es sich vorzugsweise um den Benzoylrest.

R¹ und R² stehen vorzugsweise für H.

Bei dem Rest R³ handelt es sich besonders bevorzugt um einen Arylrest, der gegebenenfalls wie oben angegeben, substituiert sein kann. Besonders geeignete Reste R³ sind Phenyl, p-Tolyl und p-Nitrophenyl.
Besonders bevorzugt wird eine Verbindung,worin R³ Phenyl bedeutet, und x für CN steht.
Die Verbindungen der Formel II sind bekannt und können in bekannter Weise oder analog zu bekannten Verfahren hergestellt werden, siehe z.B. den eingangs genannten Stand der Technik. Beispielsweise kann man ein Amin X-CH₂-NH₂ mit einer Formaldehydquelle, wie wässrige Formalinlösung oder Paraformaldehyd, zur Reaktion bringen, beispielsweise durch Lösen des primären Amins in der wässrigen Formalinlösung. Das gewünschte Hexahydrotriazin kann anschließend durch Kristallisation oder Abdampfen des Wassers gewonnen werden. Dieses Verfahren ist in der DE-A-2645085 entsprechend der US 4,181,800 beschrieben.

Die Verbindung der Formel II, worin X für CN steht, kann durch Strecker-Synthese erhalten werden, d.h. durch Umsetzung von Ammoniak, Blausäure und einer Formaldehydquelle. Ein derartiges Verfahren ist beispielsweise in der US 2,823,222 beschrieben, auf die hiermit in vollem Umfang Bezug genommen wird.

Die Verbindungen der Formel III lassen sich nach mehreren Verfahren herstellen. Eine erste Möglichkeit ist die Umsetzung eines Salzes einer Carbonsäure R³COOH mit einem Phosphortrihalogenid, insbesondere Phosphortrichlorid. Als Carbonsäuresalz verwendet man vorzugsweise ein Alkalimetall- oder Erdalkalimetallsalz, insbesondere das Natrium-, Kalium- oder Calciumsalz, oder das Ammoniumsalz. Man kann diese Umsetzung ohne Verwendung eines Lösungsmittels durchführen und das erhaltene Reaktionsprodukt direkt in Schritt (a) einsetzen. Vorzugsweise arbeitet man jedoch in einem inerten organischen Lösungsmittel, insbesondere in einem Ether, wie Dioxan, Tetrahydrofuran etc., einem halogenierten, insbesondere einem chlorierten oder fluorierten organischen Lösungsmittel, wie Dichlormethan, 1,2-Dichlorethan, 1,2-Dichlorpropan, 1,1,1-Trichlorethan, 1,1,2-Trichlorethan, 1,1,2,2-Tetrachlorethan, Chlorbenzol oder 1,2-Dichlorbenzol, einem aliphatischen oder aromatischen Kohlenwasserstoff, wie n-Octan, Toluol, Xylol, oder Nitrobenzol. Vorzugsweise verwendet man das gleiche Lösungsmittel wie anschließend in Schritt (a). Besonders bevorzugt ist die Verwendung eines chlorierten Kohlenwasserstoffs.

Das bei der Umsetzung entstehende Salz, beispielsweise Natriumchlorid bei Verwendung von Phosphortrichlorid und dem Natriumsalz der eingesetzten Carbonsäure, kann nach der Umsetzung ausgeschleust werden. Erhält man als Salz Ammoniumchlorid oder ein anderes Ammoniumhalogenid, so kann man den eingesetzten Ammoniak zurück gewinnen, indem man eine wässerige Lösung des Salzes mit einer starken Base, beispielsweise Natronlauge, alkalisch stellt (pH 11-14) und anschließend den Ammoniak in üblicher Weise ausstrippt. Der auf diese Weise erhaltene Ammoniak kann nach Trocknung, beispielsweise durch Destillation in flüssigem oder gasförmigem Zustand, oder als wässerige Lösung wieder zurück geführt und zur Herstellung das Ammoniumsalzes der Carbonsäure verwendet werden.

Eine weitere Möglichkeit zur Herstellung der Verbindungen der Formel III ist die Umsetzung einer Carbonsäure R³COOH mit dem Phosphortrihalogenid in Gegenwart eines Amins. Als Amin verwendet man insbesondere aliphatische oder cycloaliphatische Di- oder Triamine, wie Triethylamin, Tributylamin, Dimethylethylamin oder Dimethylcyclohexylamin, sowie Pyridin. Im Allgemeinen arbeitet man bei einem derartigen Verfahren in einem organischen Lösungsmittel. Geeignete Lösungsmittel sind oben im Zusammenhang mit der ersten Herstellungsmöglichkeit angegeben. Bevorzugt verwendet man Dioxan, 1,2-Dichlorpropan, 1,2-Dichlorethan, Nitrobenzol oder Toluol. Bei Verwendung eines Lösungsmittels fällt das gebildete Aminhydrochlorid aus und kann abfiltriert werden. Behandelt man die Aminhydrochloride mit einer starken Base, beispielsweise mit wässeriger Natronlauge, so werden die Amine aus dem Hydrochlorid freigesetzt. Flüchtige Amine kann man dann durch Destillation oder Extraktion zurück gewinnen. Nicht flüchtige Amine kann man durch Extraktion oder, wenn bei der Aminfreisetzung ein zweiphasengemisch erhalten wird, durch Phasentrennung zurück gewinnen. Feste Amine können durch Abfiltrieren zurück gewonnen werden. Die zurück gewonnenen Amine kann man, gegebenenfalls nach Trocknung, wieder in das Verfahren zurück führen.

Eine weitere Möglichkeit der Herstellung der Verbindungen der Formel III ist die Umsetzung der Carbonsäure R³COOH mit einem Phosphortrihalogenid, insbesondere Phosphortrichlorid, ohne Zusatz einer Base. Bei dieser Umsetzung ist es erforderlich, den sich bildenden Halogenwasserstoff aus dem Reaktionsgemisch zu entfernen. Dies kann in üblicher Weise erfolgen, beispielsweise durch Durchleiten eines inerten Gases, wie Stickstoff. Der freigesetzte Halogenwasserstoff kann dann in Form einer wässerigen Lösung zur Hydrolyse in Schritt (b) verwendet werden.

Schritt (a) des erfindungsgemäßen Verfahrens kann mit oder ohne Lösungsmittel, beispielsweise in der Schmelze, durchgeführt werden. Vorzugsweise verwendet man jedoch ein inertes organisches Lösungsmittel, beispielsweise einen Kohlenwasserstoff, wie Toluol oder Xylol, einen Ether, wie Tetrahydrofuran, Dioxan oder Dibutylether, Nitrobenzol etc. Besonders bevorzugt arbeitet man in einem halogenierten Lösungsmittel, insbesondere einem chlorierten, vorzugsweise einem chlorierten und/oder fluorierten aliphatischen Kohlenwasserstoff, wie Dichlormethan, 1,2-Dichlorethan, 1,2-Dichlorpropan, 1,1,1-Trichlorethan, 1,1,2-Trichlorethan, 1,1,2/2-Tetrachlorethan, Chlorbenzol oder 1,2-Dichlorbenzol. Die Reaktionspartner werden zweckmäßigerweise in im wesentlichen stöchiometrischen Mengen eingesetzt. Man kann jedoch auch einen Überschuß von beispielsweise bis zu 10% des einen oder des anderen Reaktionspartners verwenden. Die Reaktionstemperatur liegt im Allgemeinen im Bereich von -10°C bis 140°C, vorzugsweise im Bereich von Raumtemperatur bis 100°C. Unter diesen Bedingungen sind nur kurze Reaktionszeiten erforderlich, im Allgemeinen ist die Reaktion nach 10 bis 30 min im wesentlichen vollständig.

Die gemäß Schritt (a) erhaltenen Verbindungen der Formel I sind brauchbare Zwischenprodukte zur Herstellung von Phosphonomethylglycin. Zu diesem Zweck werden die Verbindungen der Formel I einer Hydrolyse unterworfen. Diese kann sauer oder alkalisch erfolgen, vorzugsweise hydrolysiert man im Sauren. Als Säuren verwendet man insbesondere anorganische Säuren, wie Salzsäure, Schwefelsäure oder Phosphorsäure. Die alkalische Hydrolyse erfolgt im allgemeinen unter Verwendung eines Alkali- oder Erdalkalimetallhydroxids, insbesondere unter Verwendung von Natrium- oder Kaliumhydroxid.

Die Hydrolyse erfolgt zweckmäßigerweise mit einer wäßrigen Säure oder Base. Dabei wird die wäßrige Säure oder Base im Allgemeinen zu dem aus Schritt (a) erhaltenen Reaktionsgemisch gegeben. Die Hydrolyse kann ohne Lösungsmittel oder in Anwesenheit eines mit Wasser mischbaren, teilweise mischbaren oder nicht-mischbaren, inerten, organischen Lösungsmittels erfolgen. Vorzugsweise wird das in Schritt (a) eingesetzte Lösungsmittel verwendet. Bei Verwendung eines Lösungsmittels in Schritt (a) wird zweckmäßigerweise das aus Schritt (a) erhaltene Reaktionsgemisch, gegebenenfalls nach Entfernen, z. B. durch Abdestillieren, eines Teils des Lösungsmittels, direkt eingesetzt. Alternativ wird das in Schritt (a) verwendete Lösungsmittel vollständig entfernt und der Rückstand der Hydrolyse unterworfen. Das aus dem Reaktionsgemisch zurück gewonnene Lösungsmittel kann wieder bei der Herstellung der Verbindungen der Formel III oder in Schritt (a) verwendet werden.

Besonders bevorzugt erfolgt die Hydrolyse in einem Zweiphasensystem (wäßrige Phase/organische Phase). Dabei wird ein mit Wasser teilweise oder nicht mischbares organisches Lösungsmittel verwendet, vorzugsweise ein Kohlenwasserstoff, wie Toluol oder Xylol, ein Ether, wie Dibutylether und insbesondere ein halogenierter Kohlenwasserstoff wie oben als Lösungsmittel für Schritt (a) aufgeführt. Die Hydrolyse erfolgt unter intensivem Vermischen der beiden Phasen unter Verwendung üblicher Vorrichtungen, z. B. Rührreaktoren, Umlaufreaktoren oder vorzugsweise statischer Mischer. Nach beendeter Hydrolyse werden die Phasen getrennt und wie unten beschrieben aufgearbeitet.

Eine besonders bevorzugte Ausführungsform ist ein Verfahren, bei dem man Schritt (a) in einem halogenierten Lösungsmittel durchführt, das Lösungsmittel gegebenenfalls teilweise entfernt, und die erhaltene Verbindung der Formel I der Hydrolyse unterwirft, indem man das aus Stufe (a) erhaltene Reaktionsgemisch mit einer wäßrigen Säure oder Base behandelt.

Alternativ kann die Hydrolyse der Verbindung der Formel I in Phosphonomethylglycin auch enzymatisch erfolgen, z.B. mit einer Esterase oder einer Nitrilase. Die Säure oder Base verwendet man in zumindest äquivalenten Mengen, vorzugsweise jedoch im Überschuß, insbesondere in einer Menge von ≥ 2 Äquivalenten.

Die Temperatur, bei welcher die Hydrolyse durchgeführt wird, liegt im Allgemeinen im Bereich von etwa 10°C bis 180°C, vorzugsweise 20 bis 150°C.

Falls X für CH₂OY steht, ist das nach der Hydrolyse erhaltene Produkt noch zu oxidieren. Insbesondere geht man dabei von einer Verbindung aus, in der X für CH₂OH steht. Die Oxidation zu Phosphonomethylglycin erfolgt in üblicher, dem Fachmann bekannter Weise, beispielsweise durch katalytische Dehydrierung unter Kupfer-Katalyse.

Falls X für CH₂OY und Y für einen Acylrest stehen, erfolgt bei der Hydrolyse des Produktes aus Schritt a) die Abspaltung des Acylrestes unter Bildung der entsprechenden Verbindung mit X = CH₂OH. Diese wird wie oben angegeben zu Phosphonomethylglycin oxidiert.

Falls X für CH₂OY und Y für einen Alkylrest stehen, erfolgt die Etherspaltung normalerweise gleichzeitig unter den Bedingungen einer sauren Hydrolyse des Produktes aus Schritt a). Die erhaltene Verbindung mit X = CH₂OH wird wie oben angegeben zu Phosphonomethylglycin oxidiert.

Das bei der Hydrolyse unter Verwendung eines Überschusses an Säure oder Base erhaltene Phosphonomethylglycin ist in der wässrigen Phase gelöst. Die Carbonsäure R³COOH bildet sich bei Hydrolyse mit einem Überschuß an Säure direkt oder bei Basenhydrolyse nach Ansäuern mit einer starken Säure, vorzugsweise auf einen pH-Wert < 0,5. Die Abtrennung der Carbonsäure erfolgt dann in üblicher Weise, beispielsweise durch Abfiltrieren der in fester Form ausgefallenen Carbonsäure, Destillation oder Extraktion mit einem mit der wäßrigen Phase nicht mischbaren organischen Lösungsmittel. Bei zweiphasiger Hydrolyse liegt die Carbonsäure gegebenenfalls in der organischen Phase gelöst vor. Die Carbonsäure wird dann durch Abtrennen der organischen Phase entfernt und kann daraus gewünschtenfalls in üblicher Weise zurückgewonnen werden. Sie fällt in hoher Reinheit an und kann problemlos wieder zur Herstellung der Verbindung der Formel III eingesetzt werden. Das die organische Phase bildende Lösungsmittel kann zurück geführt und wieder bei der Herstellung der Verbindungen der Formel III oder in Schritt (a) verwendet werden. Zuvor wird das Lösungsmittel im Allgemeinen jedoch einer Destillation, Extraktion , Filtration und/oder Strippung unterworfen, um Verunreinigungen, wie wasserlösliche oder nicht wasserlösliche Alkohole, Phenole, Ammoniumsalze und/oder Carbonsäuren, zu entfernen.

Das Phosphonomethylglycin kann durch Einstellen der wäßrigen Phase auf einen pH-Wert im Bereich von 0,5 bis 2,0, insbesondere 0,8 bis 1,5, z.B. durch Zugabe einer Säure oder Base, z.B. HCl, H₂SO₄ oder NaOH, KOH, Ca(OH)₂ und gegebenenfalls durch Einengen der wässrigen Phase und/oder durch Zugabe eines Fällungshilfsmittels ausgefällt und in üblicher Weise gewonnen werden, beispielsweise durch Filtration. Als Fällungshilfsmittel verwendet man vorzugsweise ein mit Wasser mischbares Lösungsmittel, wie Methanol, Ethanol, Isopropanol, Aceton etc. Die Lösungsmittel können aus der Mutterlauge destillativ zurück gewonnen und wieder verwendet werden.

Bei der Verseifung entstandener Ammoniak oder entstandenes Ammoniumchlorid kann dem Verfahren wieder zugeführt werden, indem gegebenenfalls alkalisch gestellt und der Ammoniak durch Ausstrippen zurückgewonnen wird.

Falls erforderlich, kann das erhaltene Phosphonomethylglycin in üblicher Weise entfärbt werden. Dies kann beispielsweise durch Behandlung mit geringen Mengen eines Entfärbungsmittels, z.B. Oxidationsmittel, wie Perborate oder H₂O₂, oder Adsorbentien, wie Aktivkohle, erfolgen. Die Menge an Entfärbungsmittel richtet sich nach dem Grad der Verfärbung und kann vom Fachmann in einfacher Weise bestimmt werden. Die Behandlung mit dem Entfärbungsmittel kann an beliebiger Stelle nach der Hydrolyse und in üblicher Weise erfolgen. Zweckmäßigerweise gibt man das Entfärbungsmittel vor Ausfällen des Phosphonomethylglycins zu.

Das erfindungsgemäße Verfahren bzw. jede Stufe für sich genommen, kann kontinuierlich, diskontinuierlich oder als Semi-Batch-Verfahren durchgeführt werden. Es werden für solche Zwecke übliche Reaktionsbehälter verwendet, wie Rührkessel oder Rohrreaktoren, gegebenenfalls mit vorgeschalteten Mischvorrichtungen oder in den Rohrreaktor eingebauten Mischelementen.

Das erfindungsgemäße Verfahren zeichnet sich somit durch einfache Prozeßführung und billige Einsatzstoffe aus. Es fällt lediglich ein anorganisches Chlorid als Abfall an und die Schutzgruppen, nämlich die Acylreste des Triacylphosphits der Formel III, können in einfacher Weise recycliert werden. Das Verfahren ergibt Phosphonomethylglycin in sehr kurzen Reaktionszeiten und hohen Ausbeuten von >90%, ausgehend von dem Hexahydrotriazin der Formel II.

Die nachfolgenden Beispiele erläutern die Erfindung, ohne sie zu begrenzen.

### Beispiel 1:

0,2 mol Na-Benzoat werden unter Feuchtigkeitsausschluß bei Zimmertemperatur in 50 ml 1,4-Dioxan vorgelegt. Dazu werden 0,0667 mol Phosphortrichlorid getropft und der Ansatz wird 20 min bei 85°C nachgerührt (farblose Suspension). Es werden 0,0222 mol des Hexahydrotriazins 6 zugesetzt und der Ansatz wird weitere 20 min bei 85 bis 90°C gerührt (dünne Suspension, gut rührbar). Anschließend wird das Dioxan bei 40°C im Vakuum abdestilliert. Zum Rückstand gibt man 100 ml konzentrierte Salzsäure und refluxiert 4 h. Nach-dem Abkühlen wird die Benzoesäure abfiltriert, gewaschen (wenig kaltes Wasser) und getrocknet.

Die vereinigten Filtrate werden zur Trockne eingedampft. Zur Isolierung des Phosphonomethylglycins wird in wenig Wasser aufgenommen und in der Kälte durch Zugabe von NaOH bis pH = 1,5 gefällt. Vollständige Fällung wird durch Zugabe von etwas Methanol erreicht. Das Phosphonomethylglycin wird abfiltriert und getrocknet.

Ausbeute: 10,3 g Phosphonomethylglycin (Reinheit 95,3% nach HPLC), entsprechend 91% Ausbeute, bezogen auf PCl₃. In der Mutterlauge der Kristallisation sind noch 1,8 Gew.-% Phosphonomethylglycin enthalten.

### Beispiel 2:

0,2 mol Na-Benzoat werden unter Feuchtigkeitsausschluß bei Zimmertemperatur in 50 ml 1,4-Dioxan vorgelegt. Dazu werden 0,0667 mol Phosphortrichlorid getropft und der Ansatz wird 20 min bei 85°C nachgerührt (farblose Suspension). Man filtriert unter Feuchtigkeitsausschluß und wäscht den Rückstand mit etwas Dioxan nach. Zum Filtrat werden weiterhin unter Feuchtigkeitsausschluß 0,0222 mol des Hexahydrotriazins 6 zugesetzt und der Ansatz wird weitere 20 min bei 85 bis 90°C gerührt. Anschließend wird das Dioxan bei 40°C im Vakuum abdestilliert. Zum Rückstand gibt man 100 ml konzentrierte Salzsäure und refluxiert 4 h. Nach dem Abkühlen wird die ausgefallene Benzoesäure abfiltriert, gewaschen (wenig kaltes Wasser) und getrocknet.

Die vereinigten Filtrate werden zur Trockne eingedampft. Zur Isolierung des Phosphonomethylglycins wird in wenig Wasser aufgenommen und in der Kälte durch Zugabe von NaOH bis pH = 1,5 gefällt. Vollständige Fällung wird durch Zugabe von etwas Methanol erreicht. Das Phosphonomethylglycin wird abfiltriert und getrocknet.

Ausbeute: 10,5 g Phosphonomethylglycin (Reinheit 94,1% nach HPLC), entsprechend 93% Ausbeute, bezogen auf PCl₃. In der Mutterlauge der Kristallisation sind noch 1,9 Gew.-% Phosphonomethylglycin enthalten.

### Beispiel 3:

Zu einer Lösung von 0,04 mol des Hexahydrotriazins 6 in 80 ml Dioxan gibt man bei Zimmertemperatur eine Lösung von 0,12 mol Triacetylphosphit in 50 ml Dioxan. Die Lösung wird 2 h bei 100°C nachgerührt. Anschließend wird das Lösungsmittel bei 40°C zunächst bei Normaldruck, später im Vakuum abdestilliert. Zum Rückstand gibt man 100 ml konzentrierte Salzsäure und refluxiert 4 h. Die Reaktionsmischung wird zur Trockne eingedampft. Zur Isolierung des Phosphonomethylglycins wird in wenig Wasser aufgenommen und in der Kälte durch Zugabe von NaOH bis pH = 1,5 gefällt. Vollständige Fällung wird durch Zugabe von etwas Methanol erreicht. Das Phosphonomethylglycin wird abfiltriert und getrocknet.

Ausbeute: 15,4 g Phosphonomethylglycin (Reinheit 98,7% nach HPLC), entsprechend 76% Ausbeute, bezogen auf PCl₃. In der Mutterlauge der Kristallisation sind noch 1,6 Gew.-% Phosphonomethylglycin enthalten.

### Beispiel 4:

In einem 2 1-Rührkolben mit Teflonblattrührer und Rückflußkühler werden 284 g Ammoniumbenzoat in 1000 ml 1,2-Dichlorethan vorgelegt und unter Stickstoffatmosphäre werden im Verlauf von 30 min 91,5 g Phosphortrichlorid zugetropft. Die Temperatur steigt dabei auf maximal 36°C. Anschließend wird noch 30 min bei 25 bis 36°C nachgerührt. Der Ansatz wird über eine Drucknutsche filtriert und der Filterkuchen wird unter Stickstoff noch zweimal mit je 500 g Dichlorethan nachgewaschen (2054 g Filtrat).

In einem 2 1-Rührkolben mit Teflonblattrührer und Rückflußkühler wird das Filtrat bei Raumtemperatur vorgelegt und das Hexahydrotriazin 6 (45,54 g) wird zugegeben. Unter Rühren wird in 30 min auf 80°C erhitzt und 30 min bei 80°C nachgerührt. Man läßt die Lösung erkalten und hydrolysiert direkt im Anschluß daran.

Dazu werden die Einsatzstoffe in einen Rohrreaktor (Volumen ca. 600 ml) mit vorgeschaltetem statischem Mischer bei 130°C und 8 bar dosiert (1265 g/h der Dichlorethan-Lösung aus der vorangegangenen Stufe, 207 g/h 20%ige HCl). Die Verweilzeit beträgt 30 min. Ein Vorlauf wird verworfen. Zur Weiterverarbeitung wird das erhaltene Zweiphasengemisch während 60 min aufgefangen. Die Phasen werden bei 60°C getrennt und die Wasserphase wird zweimal mit je 100 g Dichlorethan extrahiert.

In einem Rundkolben mit Teflonblattrührer wird zunächst das in der Wasserphasenoch enthaltene Dichlorethan durch einstündiges Einleiten von Stickstoff bei 60°C gestrippt. Dann wird innerhalb von 15 min der pH-Wert mit 50%iger Natronlauge bei 40 bis 60°C auf pH = 1,0 eingestellt. Man rührt die entstandene Suspension noch 3 h bei 40°C nach, läßt auf Raumtemperatur abkühlen, saugt das ausgefallene Produkt ab und wäscht anschließend mit 150 g Eiswasser nach. Der erhaltene Feststoff wird bei 70°C und 50 mbar während 16 h getrocknet.

Ausbeute: 54,6 g Phosphonomethylglycin (Reinheit 96,2% nach HPLC), entsprechend 80% Ausbeute, bezogen auf PCl₃. In der Mutterlauge der Kristallisation sind noch 2,1 Gew.-% Phosphonomethylglycin enthalten.

### Beispiel 5:

Aus dem Ammoniumchlorid-Rückstand der Tribenzoylphosphit-Synthese gemäß Beispiel 4 wird eine gesättigte Lösung in Wasser hergestellt. Diese wird mit der Mutterlauge aus der Kristallisation des Phosphonomethylglycins gemäß Beispiel 4 vereinigt und mit überschüssiger Natronlauge auf pH 14 eingestellt. Anschließend wird Ammoniak mit Stickstoff aus der Reaktionsmischung gestrippt und zur Gasanalyse durch GC aufgefangen (Reinheit 99%). Die vereinigten Dichlorethanphasen aus der Verseifung werden durch Abdestillieren des Azeotrops Dichlorethan/Wasser getrocknet. In das Dichlorethan wird trockener Ammoniak bis zum vollständigen Umsatz der Benzoesäure zu Ammoniumbenzoat eingeleitet, und die entstandene Suspension von Ammoniumbenzoat in 1,2-Dichlorethan wird erneut in die Synthese eingesetzt.

Ausbeute (erste Recyclierung): 54,0 g Phosphonomethylglycin (Reinheit 97,0% nach HPLC) entspricht 79% Ausbeute bezogen auf PCl₃.

Ausbeute (zweite Recyclierung): 55,1 g Phosphonomethylglycin (Reinheit 95,5% nach HPLC) entspricht 81% Ausbeute bezogen auf PC13.

### Beispiel 6:

Die Reaktion wird durchgeführt wie in Beispiel 4 beschrieben. Statt des Lösungsmittels 1,2-Dichlorethan wird jedoch Nitrobenzol verwendet.

Ausbeute: 56,2 g Phosphonomethylglycin (Reinheit 97,4% nach HPLC), entsprechend 82% Ausbeute, bezogen auf PCl₃. In der Mutterlauge der Kristallisation sind noch 2,0 Gew.-% Phosphonomethylglycin enthalten.

### Beispiel 7:

Die Reaktion wird durchgeführt wie in Beispiel 4 beschrieben. Statt des Lösungsmittels 1,2-Dichlorethan wird jedoch 1,2-Dichlorpropan verwendet.

Ausbeute: 54,0 g Phosphonomethylglycin (Reinheit 96,92% nach HPLC), entsprechend 79% Ausbeute, bezogen auf PCl₃. In der Mutterlauge der Kristallisation sind noch 2,1 Gew.-% Phosphonomethylglycin enthalten.

### Beispiel 8:

Die Reaktion wird durchgeführt wie in Beispiel 1 beschrieben, jedoch wird 1,2-Dichlorethan statt Dioxan als Lösungsmittel verwendet. Man erhält 75% Ausbeute an Phosphonomethylglycin.

### Beispiel 9:

Die Reaktion wird durchgeführt wie in Beispiel 1 beschrieben, jedoch wird Toluol statt Dioxan als Lösungsmittel verwendet. Man erhält 68% Ausbeute an Phosphonomethylglycin.

### Beispiel 10: Herstellung des Phosphits aus Carbonsäure, Amin und PCl₃

0,05 mol Phosphortrichlorid in 15 ml Toluol werden bei 0 °C zu einer Lösung von 0,15 mol Benzoesäure und 0,15 mol Dimethylcyclohexylamin in 90 ml Toluol getropft. Man rührt 15 min bei 0 °C nach und lässt anschließend auf Zimmertemperatur erwärmen. Das ausgefallene Hydrochlorid wird unter Feuchtigkeitsausschluss über eine Drucknutsche abfiltriert. Über eine Analyse des Filtrats durch ¹H-NMR und ³¹P-NMR wird das Tribenzoylphosphit charakterisiert (Ausbeute: 99%). Gibt man den nach Abdestillieren des Toluols aus dem Filtrat erhaltenen Rückstand in 0,15 mol 10%ige NaOH, so kann man Dimethylcyclohexylamin durch Phasentrennung und anschließende Extraktion mit Toluol quantitativ zurück gewinnen. Anschließend wird die Lösung durch Auskreisen des Wassers getrocknet und kann wieder verwendet werden.

### Beispiel 11:

0,2 mol Na-Benzoat werden unter Feuchtigkeitsausschluss bei Zimmertemperatur in 50 ml 1,4-Dioxan vorgelegt. Dazu werden 0,0667 mol Phosphortrichlorid getropft und der Ansatz 20 min bei 85 °C nachgerührt (farblose Suspension). Es werden 0,0222 mol des Hexahydrotriazins 1 (X=CN) zugesetzt und der Ansatz wird weitere 20 min bei 85-90 °C nachgerührt (dünne Suspension, gut rührbar). Anschließend wird das Dioxan bei 40 °C im Vakuum abdestilliert. Zum Rückstand gibt man 100 ml konzentrierte Salzsäure und refluxiert 4 h. Nach dem Abkühlen wird die Benzoesäure abfiltriert und gewasehen (wenig kaltes Wasser). Die vereinigten Filtrate werden zweimal mit je 30 ml Toluol extrahiert, zur Trockne einrotiert und zum Entfernen überschüssiger Salzsäure noch dreimal mit Ethanol abrotiert. Die Toluolphase wird eingeengt und der Rückstand wird mit der zurück gewonnenen Benzoesäure vereinigt.

Zur Isolierung des Phosphonomethylglycins aus dem Rückstand der wässerigen Phase kann man nun in wenig Wasser aufnehmen und in der Kälte bei pH 1,0 (Zugabe von NaOH) fällen. Vollständige Fällung wird durch Zugabe von etwas Methanol erreicht, das aus der Mutterlauge durch Destillation zurück gewonnen wird. Ausbeute: 91%.

Die zurück gewonnene Benzoesäure (0,2 mol, Reinheit >99% nach HPLC) wird in 0,2 mol 5%iger NaOH gelöst und das Wasser anschließend abdestilliert und der Rückstand getrocknet. Das so erhaltene Natriumbenzoat wird zusammen mit dem zurückgewonnenen Dioxan wieder in die Synthese eingesetzt.
Ausbeute (erste Recyclierung): 90%
Ausbeute (zweite Recyclierung): 84%
Ausbeute (dritte Recyclierung): 88%.

## Patentansprüche

1. Verfahren zur Herstellung von N-Phosphonomethylglycin, wobei man
a) ein Hexahydrotriazinderivat der Formel II 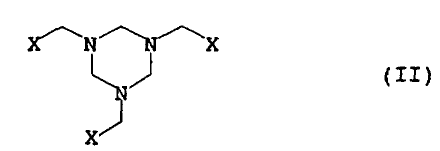
worin X für CN, COOZ, CONR¹R² oder CH₂OY steht,
Y für H oder einen Rest steht, der leicht gegen H austauschbar ist;
Z für H, ein Alkalimetall, Erdalkalimetall, C₁-C₁₈-Alkyl oder Aryl, das gegebenenfalls substituiert ist durch C₁-C₄-Alkyl, MO₂ oder OC₁-C₄-Alkyl, steht;
R¹ und R², die gleich oder verschieden sein können, für H oder C₁-C₄-Alkyl stehen,
mit einem Triacylphosphit der Formel III
P(OCOR³)₃ (III)
worin die Reste R³, die gleich oder verschieden sein können, für C₁-C₁₈-Alkyl oder Aryl, das gegebenenfalls substituiert ist durch C₁-C₄-Alkyl, NO₂ oder OC₁-C₄-Alkyl, stehen,
umsetzt und
b) das erhaltene Produkt hydrolysiert und, falls X für CH₂OY steht, oxidiert.

2. Verfahren nach Anspruch 1, wobei man durch Umsetzung des Hexahydrotriazinderivates der Formel II mit dem Triacylphosphit der Formel III eine Verbindung der Formel I 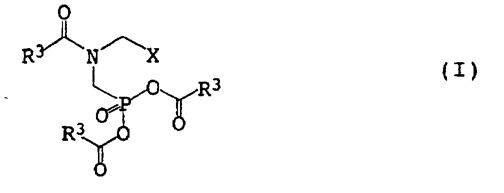 worin R³ und X die in Anspruch 1 angegebenen Bedeutungen besitzen, erhält.

3. Verfahren zur Herstellung einer Phosphonoverbindung der Formel I 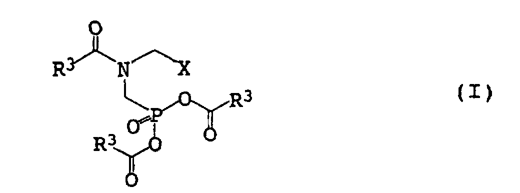 worin die Reste R³, die gleich oder verschieden sein können, für C₁-C₁₈-Alkyl oder Aryl, das gegebenenfalls substituiert ist durch C₁-C₄-Alkyl, NO₂ oder OC₁-C₄-Alkyl, stehen, und
X für CN, COOZ, CONR¹R² oder CH₂OY steht,
Y für H oder einen Rest steht, der leicht gegen H austauschbar ist;
Z für H, ein Alkalimetall, Erdalkalimetall, C₁-C₁₈-Alkyl oder Aryl, das gegebenenfalls substituiert ist durch C₁-C₄-Alkyl, NO₂ oder OC₁-C₄-Alkyl, steht;
R¹ und R², die gleich oder verschieden sein können, für H oder C₁-C₄-Alkyl stehen, wobei man ein Hexahydrotriazinderivat der Formel II 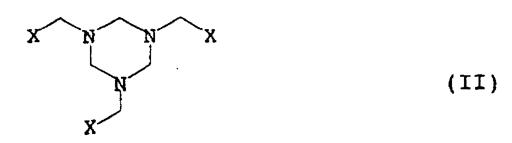 mit einem Triacylphosphit der Formel III
P(OCOR³)₃ (III)
worin R³ und X die oben angegebenen Bedeutungen besitzen, umsetzt.

4. Verfahren nach einem der vorhergehenden Ansprüche, wobei X für CN oder COOZ steht.

5. Verfahren nach einem der vorhergehenden Ansprüche, wobei R³ für Phenyl, das gegebenenfalls durch C₁-C₄-Alkyl, NO₂ oder OC₁-C₄-Alkyl substituiert ist, oder für CH₃ steht.

6. Verfahren nach einem der vorhergehenden Ansprüche, wobei man Schritt (a) in einem organischen Lösungsmittel durchführt.

7. Verfahren nach Anspruch 6, wobei man als Lösungsmittel Dioxan oder Tetrahydrofuran verwendet.

8. Verfahren nach Anspruch 6, wobei man ein chloriertes organisches Lösungsmittel verwendet.

9. Verfahren nach Anspruch 8, wobei man 1,2-Dichlorethan als Lösungsmittel verwendet.

10. Verfahren nach einem der vorhergehenden Ansprüche, wobei man die Verbindungen der Formeln II und III in im wesentlichen äquivalenten Mengen einsetzt.

11. Verfahren nach einem der vorhergehenden Ansprüche, wobei die Verbindung der Formel III hergestellt wird durch Umsetzung einer Carbonsäure der Formel IV
R³COOH (IV),
worin R³ die in Anspruch 1 angegebenen Bedeutungen besitzt, oder eines Salzes davon mit einem Phosphortrihalogenid.

12. Verfahren nach Anspruch 11, wobei ein Alkalimetallsalz oder das Ammoniumsalz der Carbonsäure der Formel IV mit dem Phosphorhalogenid umgesetzt wird.

13. Verfahren nach Anspruch 11, wobei die Carbonsäure der Formel IV in Gegenwart eines Amins mit dem Phosphorhalogenid umgesetzt wird.

14. Verfahren nach Anspruch 11, wobei die Carbonsäure der Formel IV mit dem Phosphorhalogenid ohne Base umgesetzt wird.

15. Verfahren nach einem der Ansprüche 11 bis 14, wobei man die Umsetzung in einem inerten organischen Lösungsmittel durchführt, das ausgewählt ist unter aromatischen oder aliphatischen Kohlenwasserstoffen und chlorierten Kohlenwasserstoffen.

16. Verfahren nach Anspruch 15, wobei das Lösungsmittel nach der Umsetzung zurück gewonnen und recycliert wird.

17. Verfahren nach einem der Ansprüche 1, 2 oder 4 bis 9, wobei man die Verbindung der Formel I mit einer wässrigen Säure hydrolysiert.

18. Verfahren nach Anspruch 17, wobei die Hydrolyse in einem Zweiphasensystem durchgeführt wird.

19. Verfahren nach Anspruch 18, wobei das Phosphonomethylglycin aus der wässerigen Phase durch Einstellen des pH auf einen Wert im Bereich von 0,5 bis 2,0 ausgefällt wird.

20. Verfahren nach Anspruch 19, wobei die Ausfällung des Phosphonomethylglycins in Anwesenheit eines mit Wasser mischbaren Lösungsmittels erfolgt.

21. Phosphonoverbindungen der Formel I 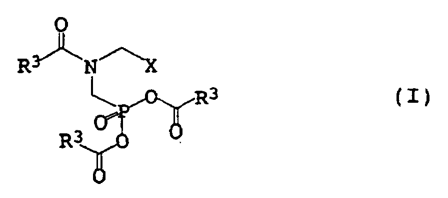 worin die Reste R³, die gleich oder verschieden sein können, für C₁-C₁₈-Alkyl oder Aryl, das gegebenenfalls substituiert ist durch C₁-C₄-Alkyl, NO₂ oder OC₁-C₄-Alkyl, stehen, und
X für CN, COOZ, CONR¹R² oder CH₂OY steht,
Y für H oder einen Rest steht, der leicht gegen H austauschbar ist;
z für H, ein Alkalimetall, Erdalkalimetall, C₁-C₁₈-Alkyl oder Aryl, das gegebenenfalls substituiert ist durch C₁-C₄-Alkyl, NO₂ oder OC₁-C₄-Alkyl, steht;
R¹ und R², die gleich oder verschieden sein können, für H oder C₁-C₄-Alkyl stehen, und die Salze davon.

22. Verbindungen nach Anspruch 21, wobei R³ für Phenyl, das gegebenenfalls substituiert ist durch C₁-C₄-Alkyl, NO₂ oder OC₁-C₄-Alkyl, oder für Methyl steht.

23. Verbindungen nach Anspruch 21 oder 22, wobei X für CN oder COOZ steht, wobei Z für H, Alkalimetall oder C₁-C₁₈-Alkyl steht.

24. Verbindung nach Anspruch 21 der Formel

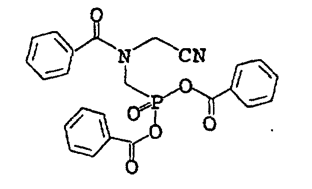

25. Zwischenprodukt, erhältlich durch Umsetzung eines Hexahydrotriazinderivates der Formel II 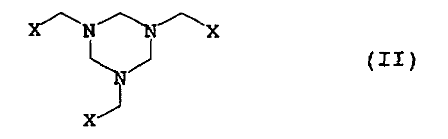 worin X für CN, COOZ, CONR¹R² oder CH₂OY steht,
Y für H oder einen Rest steht, der leicht gegen H austauschbar ist;
Z für H, ein Alkalimetall, Erdalkalimetall, C₁-C₁₈-Alkyl oder Aryl, das gegebenenfalls substituiert ist durch C₁-C₄-Alkyl, NO₂ oder OC₁-C₄-Alkyl, steht;
R¹ und R², die gleich oder verschieden sein können, für H oder C₁-C₄-Alkyl stehen,
mit einem Triacylphosphit der Formel III
P(OCOR³)₃ (III)
worin die Reste R³, die gleich oder verschieden sein können, für C₁-C₁₈-Alkyl oder Aryl, das gegebenenfalls substituiert ist durch C₁-C₄-Alkyl, NO₂ oder OC₁-C₄-Alkyl, stehen.

## Claims

1. A process for the preparation of N-phosphonomethylglycine, wherein
a) a hexahydrotriazine derivative of the formula II 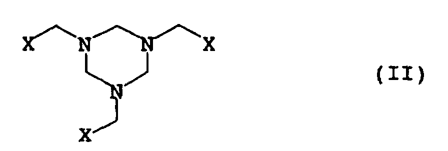 in which
X is CN, COOZ, CONR¹R² or CH₂OY,
Y is H or a radical which is readily exchangable for H,
Z is H, an alkali metal, alkaline earth metal, C₁-C₁₈-alkyl or aryl, which is unsubstituted or substituted by C₁-C₄-alkyl, NO₂ or OC₁-C₄-alkyl,
R¹ and R² can be identical or different and are H or C₁-C₄-alkyl,
is reacted with a triacyl phosphite of the formula III
P(OCOR³)₃ (III)
in which the radicals R³, which can be identical or different, are C₁-C₁₈-alkyl or aryl which is unsubstituted or substituted by C₁-C₄-alkyl, NO₂ or OC₁-C₄-alkyl, and
b) the product obtained is hydrolyzed, and, if X is CH₂OY, oxidized.

2. A process as claimed in claim 1, wherein reaction of the hexahydrotriazine derivative of the formula II with the triacyl phosphite of the formula III gives a compound of the formula I 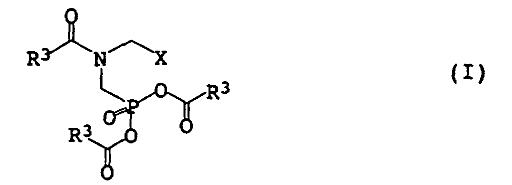 in which R³ and X have the meanings stated in claim 1.

3. A process for the preparation of a phosphono compound of the formula I 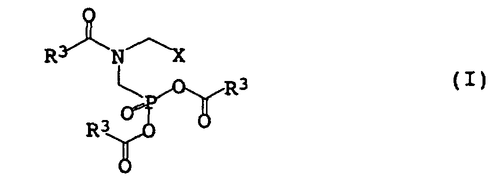
in which the radicals R³, which can be identical or different, are C₁-C₁₈-alkyl or aryl which is unsubstituted or substituted by C₁-C₄-alkyl, NO₂ or OC₁-C₄-alkyl, and
X us CN, COOZ, CONR¹R² or CH₂OY,
Y is H or a radical which is readily exchangeable for H;
Z is H, an alkali metal, alkaline earth metal, C₁-C₁₈-akyl or aryl, which is unsubstituted or substituted by C₁-C₄-alkyl, NO₂ or OC₁-C₄-alkyl;
R¹ and R², which can be identical or different, are H or C₁-C₄-alkyl, in which a hexahydrotriazine derivative of the formula II 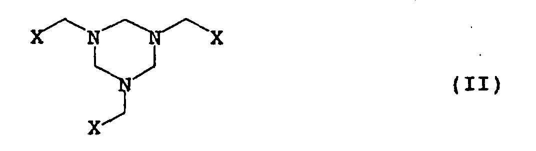
is reacted with a triacyl phosphite of the formula III
P(OCOR³)₃ (III)
in which R³ and X are as defined above.

4. A process as claimed in any of the preceding claims, wherein X is CN or COOZ.

5. A process as claimed in any of the preceding claims, wherein R³ is phenyl which is unsubstituted or substituted by C₁-C₄-alkyl, NO₂ or OC₁-C₄-alkyl, or is CH₃.

6. A process as claimed in any of the preceding claims, wherein step (a) is carried out in an organic solvent.

7. A process as claimed in claim 6, wherein the solvent used is dioxane or tetrahydrofuran.

8. A process as claimed in claim 6, wherein a chlorinated organic solvent is used.

9. A process as claimed in claim 8, wherein 1,2-dichloroethane is used as solvent.

10. A process as claimed in any of the preceding claims, wherein the compounds of the formulae II and III in employed in essentially equivalent amounts.

11. A process as claimed in any of the preceding claims, wherein the compound of the formula III is prepared by reacting a carboxylic acid of the formula IV
R³COOH (IV),
in which R³ has the meanings stated in claim 1 or a salt thereof with a phosphorus trihalide.

12. A process as claimed in claim 11, wherein an alkali metal salt or the ammonium salt of the carboxylic acid of the formula IV is reacted with the phosphorus halide.

13. A process as claimed in claim 11, wherein the carboxylic acid of the formula IV is reacted with the phosphorus halide in the presence of an amine.

14. A process as claimed in claim 11, wherein the carboxylic acid of the formula IV is reacted with the phosphorus halide in the absence of a base.

15. A process as claimed in any of claims 11 to 14, wherein the reaction is carried out in an inert organic solvent which is selected from among the aromatic or aliphatic hydrocarbons and chlorinated hydrocarbons.

16. A process as claimed in claim 15, wherein the solvent is recovered after the reaction and recycled.

17. A process as claimed in any of claims 1, 2 or 4 to 9, wherein the compound of the formula I is hydrolyzed with an aqueous acid.

18. A process as claimed in claim 17, wherein the hydrolysis is carried out in a two-phase system.

19. A process as claimed in claim 18, wherein the phosphonomethylglycine is precipitated from the aqueous phase by bringing the pH to a value of in the range of 0.5 to 2.0.

20. A process as claimed in claim 19, wherein the phosphonomethylglycine is precipitated in the presence of a solvent which is miscible with water.

21. A phosphono compound of the formula I 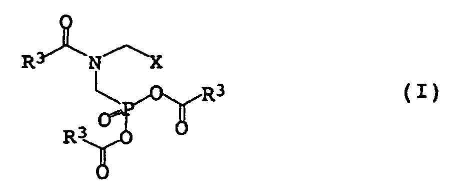 in which the radicals R³, which can be identical or different, are C₁-C₁₈-alkyl or aryl which is unsubstituted or substituted by C₁-C₄-alkyl, NO₂ or OC₁-C₄-alkyl, and
X is CN, COOZ, CONR¹R² or CH₂OY,
Y is H or a radical which is readily exchangeable for H;
Z is H, an alkali metal, alkaline earth metal, C₁-C₁₈-akyl or aryl, which is unsubstituted or substituted by C₁-C₄-alkyl, NO₂ or OC₁-C₄-alkyl;
R¹ and R², which can be identical or different, are H or C₁-C₄-alkyl, or a salt thereof.

22. A compound as claimed in claim 21, wherein R³ is phenyl which is unsubstituted or substituted by C₁-C₄-alkyl, NO₂ or OC₁-C₄-alkyl, or is methyl.

23. A compound as claimed in claim 21 or 22, wherein X is CN or COOZ, wherein Z is H, alkali metal or C₁-C₁₈-alkyl.

24. A compound as claimed in claim 21 of the formula

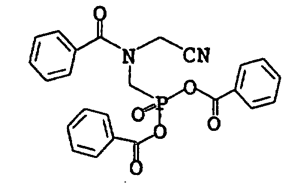

25. An intermediate obtainable by reacting a hexahydrotriazine derivative of the formula II 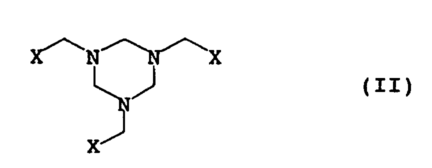
in which X is CN, COOZ, CONR¹R² or CH₂OY,
Y is H or a radical which is readily exchangeable for H;
Z is H, an alkali metal, alkaline earth metal, C₁-C₁₈-alkyl or aryl, which is unsubstituted or substituted by C₁-C₄-alkyl, NO₂ or OC₁-C₄-alkyl;
R¹ and R² can be identical or different and are H or C₁-C₄-alkyl,
is reacted with a triacyl phosphite of the formula III
P(OCOR³)₃ (III)
in which the radicals R³, which can be identical or different, are C₁-C₁₈-alkyl or aryl which is unsubstituted or substituted by C₁-C₄-alkyl, NO₂ or OC₁-C₄-alkyl.

## Revendications

1. Procédé de production de N-phosphonomethylglycine, dans lequel on fait réagir
a) un dérivé d'hexahydrotriazine de formule II 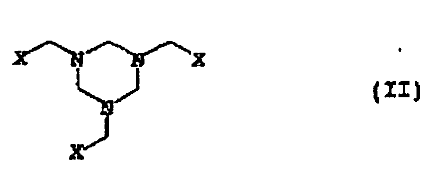
dans laquelle X représente CN, COOZ, CONR¹R² ou CH₂OY,
Y représente H ou un radical facilement interchangeable contre H ;
Z représente H, un métal alcalin, un métal alcalino-terreux, alkyle en C₁-C₁₈ ou aryle, substitué le cas échéant par alkyle en C₁-C₄, NO₂ ou O alkyle en C₁-C₄ ;
R¹ et R², qui peuvent être identiques ou différents, représentent H ou alkyle en C₁-C₄,
avec un phosphite de triacyl de formule III
P(OCOR³)₃ (III)
dans laquelle les radicaux R³, qui peuvent être identiques ou différents, représentent alkyle en C₁-C₁₈ ou aryle, substitué le cas échéant par alkyle en C₁-C₄, NO₂ ou O alkyle en C₁-C₄,
et
b) le produit obtenu est hydrolysé et, si X représente CH₂OY, est oxydé.

2. Procédé selon la revendication 1, dans lequel on obtient un composé de formule I en faisant réagir le dérivé d'hexahydrotriazine de formule II avec le phosphite de triacyl de formule III. 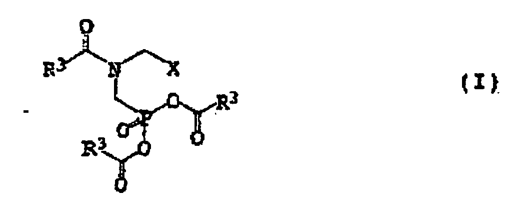 dans laquelle R³ et X possèdent les significations indiquées à la revendication
1.

3. Procédé de production d'un composé phosphono de formule I 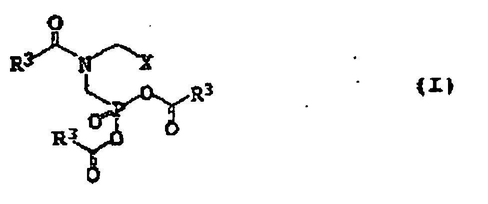
dans laquelle les radicaux R³, qui peuvent être identiques ou différents, représentent alkyle en C₁-C₁₈ ou aryle, substitué le cas échéant par alkyle en C₁-C₄, NO₂ ou O alkyle en C₁-C₄ et
X représente CN, COOZ, CONR¹R² ou CH₂OY,
Y représente H ou un radical facilement interchangeable contre H ;
Z représente H, un métal alcalin, un métal alcalino-terreux, alkyle en C₁-C₁₈ ou aryle, substitué le cas échéant par alkyle en C₁-C₄, NO₂ ou O alkyle en C₁-C₄;
R¹ et R², qui peuvent être identiques ou différents, représentent H ou alkyle en C₁-C₄, un dérivé d'hexahydrotriazine de formule II 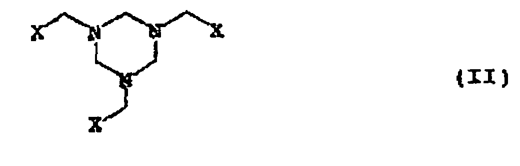 étant mis à réagir avec un phosphite de triacyl de formule III
P(OCOR³)₃ (III)
dans laquelle R³ et X possèdent les significations susmentionnées.

4. Procédé selon l'une des revendications précédentes, dans lequel X représente CN ou COOZ.

5. Procédé selon l'une des revendications précédentes, dans lequel R³ représente phényle, substitué le cas échéant par alkyle en C₁-C₄, NO₂ ou O alkyle en C₁-C₄, ou CH₃.

6. Procédé selon l'une des revendications précédentes, dans lequel on exécute l'étape (a) dans un solvant organique.

7. Procédé selon la revendication 6, dans lequel on utilise du dioxane ou du tetrahydrofuranne comme solvant.

8. Procédé selon la revendication 6, dans lequel on utilise un solvant organique chloré.

9. Procédé selon la revendication 8, dans lequel on utilise du 1,2-dichloréthane comme solvant.

10. Procédé selon l'une des revendications précédentes, dans lequel on met en oeuvre les composés des formules II et III en quantités sensiblement équivalentes.

11. Procédé selon l'une des revendications précédentes, dans lequel le composé de formule III est produit en faisant réagir un acide carboxylique de formule IV
R³COOH (IV)
dans laquelle R³ possède les significations indiquées à la revendication 1, ou un sel de celui-ci avec un trihalogénure de phosphore.

12. Procédé selon la revendication 11, dans lequel on fait réagir avec l'halogénure de phosphore un sel de métal alcalin ou le sel d'ammonium de l'acide carboxylique de la formule IV.

13. Procédé selon la revendication 11, dans lequel on fait réagir l'acide carboxylique de formule IV avec l'halogénure de phosphore en présence d'une amine.

14. Procédé selon la revendication 11, dans lequel on fait réagir l'acide carboxylique de formule IV avec l'halogénure de phosphore sans base.

15. Procédé selon l'une des revendications 11 à 14, dans lequel on exécute la réaction dans un solvant organique inerte sélectionné parmi les hydrocarbures aromatiques ou aliphatiques et les hydrocarbures chlorés.

16. Procédé selon la revendication 15, dans lequel le solvant est récupéré et recyclé après la réaction.

17. Procédé selon l'une des revendications 1, 2 ou 4 à 9, dans lequel on hydrolyse le composé de formule I avec un acide aqueux.

18. Procédé selon la revendication 17, dans lequel l'hydrolyse est exécutée dans un système biphasé.

19. Procédé selon la revendication 18, dans lequel la phosphonomethylglycine issue de la phase aqueuse est précipitée par ajustement du pH à une valeur comprise dans la plage de 0,5 à 2,0.

20. Procédé selon la revendication 19, dans lequel la précipitation de la phosphonomethylglycine s'effectue en présence d'un solvant miscible à l'eau.

21. Composé phosphono de formule I 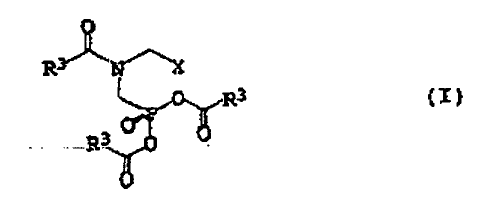 dans laquelle les radicaux R³, qui peuvent être identiques ou différents, représentent alkyle en C₁-C₁₈ ou aryle, substitué le cas échéant par alkyle en C₁-C₄, NO₂ ou O alkyle en C₁-C₄, et
X représente CN, COOZ, CONR¹R² ou CH₂OY,
Y représente H ou un radical facilement interchangeable contre H ;
Z représente H, un métal alkalin, un métal alcalino-terreux, alkyle en C₁-C₁₈ ou aryle, substitué le cas échéant par alkyle en C₁-C₄, NO₂ ou O alkyle en C₁-C₄;
R¹ et R², qui peuvent être identiques ou différents, représentent H ou alkyle en C₁-C₄ et leurs sels.

22. composée selon la revendication 21, dans lesquels R³ représente, phényle, substitué le cas échéant par alkyle en C₁-C₄, NO₂ ou O alkyle en C₁-C₄ ou méthyle.

23. Composés selon les revendications 21 ou 22, dans lesquelles X représente CN ou COOZ, Z représentant H, un métal alcalin ou alkyle en C₁-C₁₈.

24. Composé selon la revendication 21 répondant à la formule

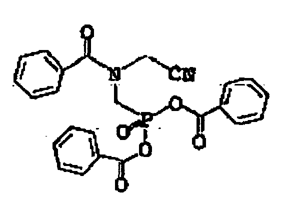

25. Produit intermédiaire que l'on peut obtenir en faisant réagir un dérivé de l'hexahydrotriazine de formule II 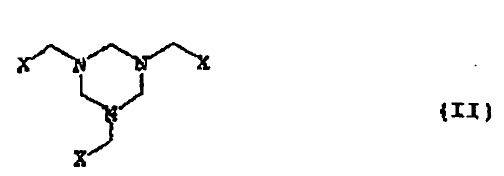
dans laquelle X représente CN, COOZ, CONR¹R² ou CH₂OY,
Y représente H ou un radical facilement interchangeable contre H ;
Z représente H, un métal alkalin, un métal alcalino-terreux, alkyle en C₁-C₁₈ ou aryle, substitué le cas échéant par un alkyle en C₁-C₄, NO₂ ou O alkyle en C₁-C_{4;}
R¹ et R², qui peuvent être identiques ou différents, représentent H ou alkyle en C₁-C₄,
avec un phosphite de triacyl de formule III
P(OCOR³)₃ (III)
dans laquelle les radicaux R³, qui peuvent être identiques ou différents, représentent alkyle en C₁-C₁₈ ou aryle, substitué le cas échéant par alkyle en C₁-C₄, NO₂ ou O alkyle en C₁-C₄.
